# EUROPÄISCHE PATENTSCHRIFT

(11) **EP 1 151 941 B1**
(45) Veröffentlichungstag und Bekanntmachung des Hinweises auf die Patenterteilung: **27.07.2005**
(21) Anmeldenummer: 01110487.4
(22) Anmeldetag: 27.04.2001
(51) Int. Cl.: B65G 1/08, B65G 47/88

(54) **Durchlaufregal zum Kommissionieren von Lagereinheiten**
Gravity feed rack for orderpicking from storage units
Etagère inclinée pour la préparation de commandes à partir des unités de stockage

(30) Priorität: 02.05.2000 DE 10021318
(43) Veröffentlichungstag der Anmeldung: 07.11.2001
(73) Patentinhaber: Schmale, Erhard, 34479 Breuna-Wettesingen (DE)
(72) Erfinder: Schmale, Erhard, 34479 Breuna-Wettesingen (DE)
(74) Vertreter: WALTHER, WALTHER & HINZ Patentanwälte

(56) Entgegenhaltungen:
- EP-A- 0 888 983
- DE-A- 4 413 475
- DE-U- 9 305 450
- US-A- 3 986 605
- US-A- 4 182 440

## Beschreibung

Die Erfindung betrifft ein Durchlaufregal zum Kommissionieren von Lagereinheiten, mit mindestens zwei parallel zueinander angeordneten Röllchenbahnen, wobei die Lagereinheiten auf den Röllchenbahnen unter Schwerkrafteinfluss von einer Aufgabeseite zu einer Entnahmeseite des Regals gelangen, wobei mindestens die eine Röllchenbahn eine Sperreinrichtung aufweist, durch die eine Lagereinheit in einer der Entnahmeposition in Laufrichtung vorgelagerten Warteposition arretierbar ist, wobei die Sperreinrichtung einen um eine Achse in gegensinnigen Richtungen schwenkbaren Hebel mit zwei winklig zueinander angeordneten Schenkeln umfasst, wobei der eine der beiden Schenkel ein winklig dazu verlaufendes Bein aufweist, wobei das Bein eine Öffnung zur Aufnahme der Schwenkachse aufweist, wobei der Öffnung nachgeordnet ein Gewicht als Mittel zum Aufstellen des Hebels vorgesehen ist.

Durchlaufregale bestehen üblicherweise aus mehreren nebeneinander angeordneten Rollen- oder Röllchenbahnen, auf denen Lagereinheiten, beispielsweise in Form von Kästen oder auch Paletten verschieblich angeordnet sind. Ein derart bekanntes Durchlaufregal hat zwei Enden, nämlich eine Aufgabeseite und eine Entnahmeseite. Eine Palette, die beispielsweise auf der Aufgabeseite auf die Rollenbahn aufgesetzt wird, bewegt sich auf Grund der Schwerkraft in Richtung der Entnahmeseite. An der Entnahmeseite können dann einzelne Waren oder die Palette insgesamt entnommen werden.

Beim sogenannten artikelbezogenen Kommissionieren werden in einer ersten Stufe gleiche Artikel vom Kommissionierer für mehrere Aufträge gesammelt und in einer zweiten Stufe den entsprechenden Aufträgen zugeordnet. Hierbei werden die Kommissionierstationen, d. h. die einzelnen Entnahmestationen von nebeneinander angeordneten einzelnen Durchlaufregalen als Wechselplätze betrieben, bei denen der Arbeitsplatz des Kommissionierers ortsfest ist, jedoch die Warenbereitstellung dynamisch erfolgt, d. h., dass das Lagergut beispielsweise mittels Regalforderzeugen aus seinem Lagerort herausgeholt und der Kommissionierstation zugeführt wird. Bei dem Betrieb der Kommissionierstationen als Wechselplätze wird die Lagereinheit von der Aufgabeseite unter Schwerkraft zu der Entnahmeposition an der Kommissionerseite bewegt. Nach erfolgter Kommissionierung, d. h., nach Entnahme der einzelnen Artikel aus der Lagereinheit, wird die Lagereinheit in eine Warteposition zurückgeschoben, um von dort aus wieder von einem Regalförderzeug abgeholt zu werden. Hierzu ist aus der DE 198 29 258 eine Sperreinrichtung bekannt, mit mindestens einem um eine ortsfeste Drehachse in gegensinnigen Richtungen schwenkbaren Durchlaufsperrglied, durch das die Lagereinheit in einer der Entnahmeposition in Bewegungsrichtung vorgelagerten Position festgelegt wird. Das Durchlaufsperrglied ist ein integrierter Bestandteil der Durchlaufbahn und im Querschnitt der im Wesentlichen U-förmigen Laufbahnleiste, die die Röllchen aufnimmt, angeordnet.

Das Durchlaufsperrglied besteht aus einem Rücklaufsperrglied und einem Schwenkkulissenglied, die über ein Kopplungsglied miteinander verbunden sind. Die gesamte Vorrichtung ist sehr aufwendig in der Herstellung und auch entsprechend anfällig, vor allem wenn man bedenkt, dass Lagereinheiten mit nicht unerheblichem Gewicht auf den einzelnen Rollenbahnen bewegt werden.

Ein Durchlaufregal der eingangs genannten Art hingegen ist aus dem DE 297 11 710 U1 bzw. der EP 888 983 A1 bekannt. Diese Vorrichtung ist zwar wesentlich einfacher im Aufbau, als das Durchlaufsperrglied gemäß der DE 198 29 258 A1, jedoch immer noch relativ aufwendig in der Handhabung, da die Voraussetzung für die Funktionsfähigkeit des Hebels das Vorhandensein einer Feder ist. Jede Feder ist einem gewissen Verschleiß unterworfen und kann brechen, was bedeutet, dass die gesamte Vorrichtung dann nicht mehr funktionsfähig ist.

Gleiches gilt vom Grundsatz her auch für die DE 44 13 475 A1; die Funktionsweise der Vorrichtung dieser Literaturstelle stellt sich wie folgt dar: Ausgehend von Figur 1 wird bei Überfahren des Verriegelungshebels durch die Palette die Feder gespannt. Bei Anschlag der Palette gegen den Betätigungshebel legt sich dieser um, wie in Figur 2 dargestellt. Nachdem die Palette den Verriegelungshebel passiert hat, stellt sich dieser auf Grund der Federspannung der Feder wieder auf, nimmt hierbei den Sperrhebel mit (Figur 4), wobei durch die Feder der Verriegelungshebel in eine Position gemäß Figur 5 verschwenkt wird, wobei dann auf Grund der Feder der Sperrhebel mit der Auflagefläche in eine horizontale Position übergeht, wie in Figur 5 dargestellt, wobei dann durch die nächste Palette, die rückseitig an den Verriegelungshebel anschlägt, dieser Verriegelungshebel auf die Auflagefläche zu liegen kommt. Das heißt, der weitere Weg der Palette ist nunmehr gesperrt, wie dies aus Figur 6 erkennbar ist.

Ganz unabhängig davon, dass diese Vorrichtung sehr kompliziert ausgebildet ist, was die Vorrichtung teuer und anfällig macht, ist diese Vorrichtung auch abhängig von der Funktion der Federn. Federn haben aber die unangenehme Eigenschaft, dass diese mit der Zeit ausleiern, d. h., die Federspannung lässt mit der Zeit nach. Insbesondere dann, wenn die Federspannung nachlässt, ist allerdings zu befürchten, dass die Vorrichtung insgesamt nicht mehr funktioniert.

Ausgehend von dieser komplizierten Vorrichtung zum Trennen von auf Rollenbahnen beförderten Paletten liegt der Erfindung die Aufgabe zu Grunde, eine eben solche Vorrichtung auszubilden, die wesentlich einfacher, damit billiger und auch wartungsärmer in ihrem Aufbau ist.

Die Aufgabe wird erfindungsgemäß dadurch gelöst, dass die Lagereinheit in der Warteposition durch den durch die beiden Schenkel gebildeten Sitz gehalten ist, derart, dass der andere der beiden Schenkel in Zusammenspiel mit der Lagereinheit das Aufstellen des Hebels verhindert.

Insbesondere durch die Anordnung der horizontal ausgerichteten Schwenkachse vor dem Gegengewicht des Hebels wird erreicht, dass der Hebel quasi von allein immer in seine Ausgangsstellung - ähnlich einem Stehaufmännchen - zurückgelangt, ohne dass hierfür besondere aufwendige mechanische Einrichtungen erforderlich sind, wie dies zum Teil beim Stand der Technik der Fall ist.

Nach einem weiteren Merkmal der Erfindung ist vorgesehen, dass die beiden Schenkel etwa in einem rechten Winkel zueinander angeordnet sind, um auf Grund dieser Gestaltung, beispielsweise eine Regallagerbox im Kantenbereich, vollständig erfassen zu können.

Nach einem weiteren besonderen Merkmal ist vorgesehen, dass das Bein sich in seiner Breite über die Breite des das Bein aufnehmenden Schenkels erstreckt. Hierdurch wird erreicht, dass beim Überfahren des Hebels durch beispielsweise die Regalbox der Schenkel tatsächlich umgeklappt wird, und insofern kein Hindernis für die Box beim Überfahren bietet. Durch das weitere Merkmal, wonach die beiden Schenkel einen Sitz bilden, der durch das Bein in gekippter Position aufgenommen ist, wird erreicht, dass die beiden Schenkel jeweils parallel zu den Wandungen, d. h. einerseits an dem Boden der Box und andererseits an der Frontwandung der Box anliegen. Auch diese Maßnahme dient somit dem sicheren Erfassen der Box durch den Hebel.

Weiterhin ist vorgesehen, dass die Sperreinrichtung eine Sperrklinke umfasst, wobei die Sperrklinke bei Bewegung der Lagereinheit in Richtung auf die Aufgabeseite zu in Sperrposition steht. Hierdurch wird erreicht, dass beim Zurückschieben der Lagereinheit, beispielsweise einer Lagerbox, in Richtung auf die Aufgabeseite zu, diese nur soweit zurückgeschoben werden kann, bis diese durch die Sperrklinke gehalten wird. In diesem Fall hat die Lagereinheit den durch die beiden Schenkel des Hebels gebildeten Sitz noch nicht verlassen, so dass beim Zurückgleiten, d. h. beim Gleiten in Richtung auf die Entnahmeseite zu, der Hebel seine ihm zugedachte Wirkung entfalten kann, und die Lagereinheit in der vorgesehenen Warteposition fixiert.

Zur preiswerten Herstellung der Sperreinrichtung ist vorgesehen, dass sowohl der Hebel, als auch die Sperrklinke als Kunststoffteil, beispielsweise als Kunststoffspritzteil, ausgebildet sind.

Anhand der Zeichnungen wird die Erfindung beispielhaft näher erläutert.

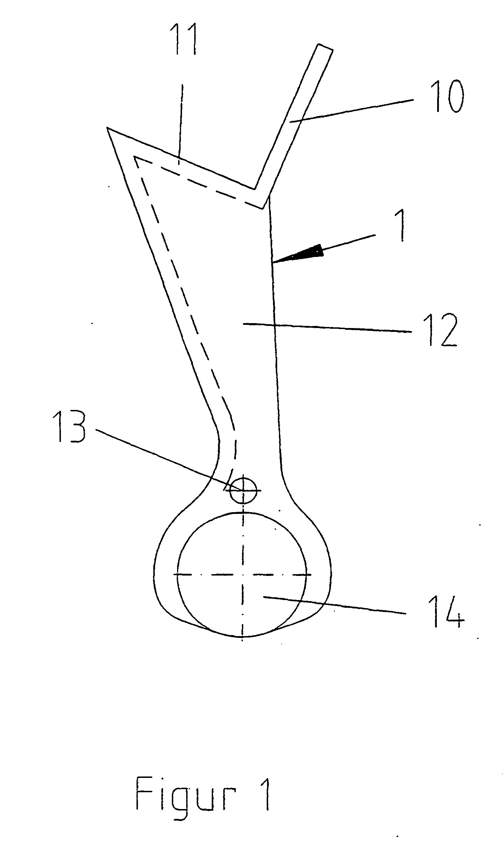

- Fig. 1: zeigt den Hebel in vergrößerter Darstellung;

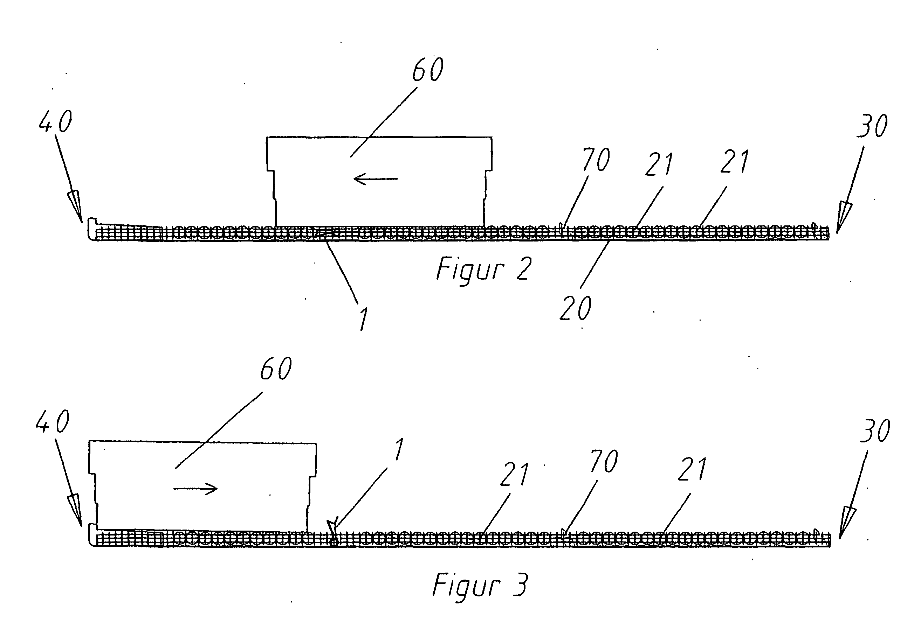

- Fig. 2 bis 5: zeigen vier seitliche Ansichten von Röllchenbahnen eines Durchlaufregales mit der erfindungsgemäßen Sperreinrichtung in vier verschiedenen Positionen einer Lagereinheit.

Gemäß Figur 1 zeigt der insgesamt mit 1 bezeichnete Hebel der Sperreinrichtung die beiden Schenkel 10 und 11, die im rechten Winkel zueinander angeordnet sind. Gehalten wird der durch die Schenkel 10 und 11 gebildete Sitz durch das insgesamt mit 12 bezeichnete Bein. Dieses Bein 12 zeigt eine Öffnung 13 zur Aufnahme einer Schwenkachse, wobei unterhalb der Öffnung 13 das Bein 12 ein Gewicht 14 besitzt. Die Größe des Gewichtes 14 ist hierbei derart bemessen, dass durch dieses Gewicht zumindest das Gewicht des Hebels kompensiert wird, mithin das Gewicht 14 das Gegengewicht zum Hebel 1 darstellt.

Die Funktionsweise der Sperreinrichtung ergibt sich im Einzelnen aus den Figuren 2 bis 5. Die insgesamt mit 20 bezeichnete Röllchenbahn zeigt die einzelnen Röllchen 21, die in U-förmigen Leisten angeordnet sind. Das heißt, die Röllchenbahn wird durch eine Mehrzahl von in geeigneter Weise miteinander verbundener Röllchenleisten gebildet. Die Aufgabeseite ist mit dem Pfeil 30 gekennzeichnet, wohingegen die Entnahmeseite mit dem Pfeil 40 bezeichnet ist. Die Laufrichtung ist durch den Pfeil 50 gekennzeichnet. Die auf der durch zwei derartige Röllchenleisten gebildete Röllchenbahn 20 laufende Lagereinheit in Form einer Lagerbox ist mit 60 gekennzeichnet.

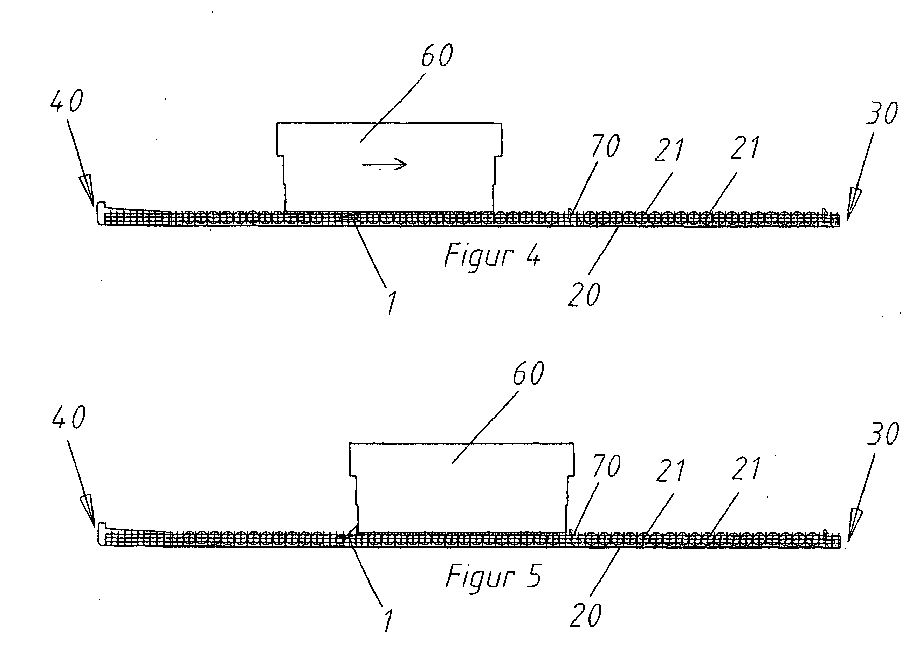

Zwischen den einzelnen Röllchen weist die Röllchenbahn im Bereich der U-förmigen Schiene zur Aufnahme der Röllchen 21 den Hebel 1 auf. Beabstandet zum Hebel 1 ist die Sperrklinke 70 im Querschnitt der Röllchenleiste angeordnet. Der Abstand zwischen Sperrklinke und Hebel entspricht in etwa der Länge der Lagereinheit 60. Die Befestigung der Sperrklinke 70 im Bereich des Querschnittes der Röllchenbahn ist hierbei derart, dass diese automatisch in Sperrposition steht, mithin eine Position gemäß den Figuren 2 bis 5 einnimmt. Bei der in Figur 2 dargestellen Position des Lagerkastens 60 erfolgt der Lauf des Lagerkastens auf der Röllchenbahn zur Entnahmeposition 40. Nach Erreichen der Entnahmeposition (Fig. 3) soll dieser in die Warteposition gebracht werden. Hierzu wird die Lagerbox in Richtung auf die Aufgabeseite zu verschoben. Allerdings wird die Bewegung der Lagerbox 60 auf der Röllchenbahn in Richtung auf die Aufgabeseite durch die Sperrklinke 70 behindert. Bei Erreichen der Sperrklinke 70 durch die Lagerbox 60 hat die Lagerbox 60 den Schenkel 10 noch nicht verlassen. Das heißt, dass dann, wenn die Lagerbox 60 an die Sperrklinke 70 anschlägt und demzufolge wieder zurückläuft, diese Lagerbox durch den durch die beiden Schenkel 10 und 11 gebildeten Sitz gehalten ist, wie dies sich unmittelbar aus Figur 5 ergibt. In dieser Position kann die Lagerbox 60 durch ein bekanntes Regalförderzeug wieder entnommen werden. Der durch die Schenkel 10, 11 gebildete Sitz ist leicht nach hinten gekippt, so dass die Schenkel 10, 11 vollflächig an den entsprechenden Wandungen der Box anliegen (Figur 5).

## Patentansprüche

1. Durchlaufregal zum Kommissionieren von Lagereinheiten, mit mindestens zwei parallel zueinander angeordneten Röllchenbahnen, wobei die Lagereinheiten auf den Röllchenbahnen unter Schwerkrafteinfluss von einer Aufgabeseite zu einer Entnahmeseite des Regals gelangen, wobei mindestens die eine Röllchenbahn eine Sperreinrichtung aufweist, durch die eine Lagereinheit in einer der Entnahmeposition in Laufrichtung vorgelagerten Warteposition arretiert ist, wobei die Sperreinrichtung eine um eine Achse in gegensinnigen Richtungen verschwenkbaren Hebel mit zwei winklig zueinander angeordneten Schenkeln umfasst, wobei der eine der beiden Schenkel (10, 11) ein winklig dazu verlaufendes Bein (12) aufweist, wobei das Bein eine Öffnung zur Aufnahme der Schwenkachse aufweist, wobei der Öffnung (13) nachgeordnet ein Gewicht (14) als Mittel zum Aufstellen des Hebels vorgesehen ist,
**dadurch gekennzeichnet,**
**dass** die Lagereinheit (60) in der Warteposition durch den die beiden Schenkel (10, 11) gebildeten Sitz gehalten ist, derart, dass der andere der beiden Schenkel (10, 11) in Zusammenspiel mit der Lagereinheit das Aufstellen des Hebels verhindert.

2. Durchlaufregal nach Anspruch 1,
**dadurch gekennzeichnet,**
**dass** die beiden Schenkel (10, 11) etwa im rechten Winkel zueinander angeordnet sind.

3. Durchlaufregal nach Anspruch 1,
**dadurch gekennzeichnet,**
**dass** das Bein (12) sich in seiner Breite über die Breite des das Bein aufnehmenden Schenkels (11) erstreckt.

4. Durchlaufregal nach Anspruch 3,
**dadurch gekennzeichnet,**
**dass** die beiden Schenkel (10, 11) einen Sitz bilden, der durch das Bein (12) in gekippter Position aufgenommen ist.

5. Durchlaufregal nach Anspruch 1,
**dadurch gekennzeichnet,**
**dass** die Sperreinrichtung eine Sperrklinke (70) umfasst.

6. Durchlaufregal nach Anspruch 5,
**dadurch gekennzeichnet,**
**dass** die Sperrklinke (70) bei Bewegung der Lagereinheit in Richtung auf die Aufgabeseite zu in Sperrposition steht,

7. Durchlaufregal nach Anspruch 1 oder 5,
**dadurch gekennzeichnet,**
**dass** der Hebel (1) und/oder die Sperrklinke (70) als Kunststoffteil ausgebildet sind.

## Claims

1. A flow-through shelf for order picking stock units, said shelf having at least two parallely disposed roller tracks, with the stock units being moved on said roller tracks from a replenishing side to a retrieval side of the shelf by the force of gravity, at least the one roller track comprising a blocking device through which a stock unit can be blocked in a waiting position located upstream of the retrieval position when viewed in the direction of movement, said blocking device including a lever with two relatively angled legs that are pivotal in opposite directions about an axis, one of the two legs (10, 11) comprising a stick (12) inclined at an angle thereto, said stick comprising an opening for receiving the pivot axis, a weight (14) serving as a means for moving the lever in an upright position being provided downstream of the opening (13),
**characterized in**
**that** the stock unit (60) is retained in the waiting position by the seat formed by the two legs (10, 11) in such a manner that the other one of the two legs (10, 11) cooperates with the stock unit to prevent the lever from returning to its upright position.

2. The flow-through shelf as set forth in claim 1,
**characterized in**
**that** the two legs (10, 11) are disposed approximately at a right angle with respect to one another.

3. The flow-through shelf as set forth in claim 1,
**characterized in**
**that** the stick (12) extends widthwise over the width of the leg (11) receiving said stick.

4. The flow-through shelf as set forth in claim 3,
**characterized in**
**that** the two legs (10, 11) form a seat that is received in a tilted position by the stick (12).

5. The flow-through shelf as set forth in claim 1,
**characterized in**
**that** the blocking device includes a blocking pawl (70).

6. The flow-through shelf as set forth in claim 5,
**characterized in**
**that**, when the stock unit is moved toward the replenishing side, the blocking pawl (70) is in the blocking position.

7. The flow-through shelf as set forth in claim 1 or 5,
**characterized in**
**that** the lever (1) and/or the blocking pawl (70) are configured to be plastic parts.

## Revendications

1. Etagère dynamique pour la préparation de commandes avec au moins deux chemins de roulement qui s'étendent parallèlement entre eux, les unités de stockage étant acheminées par gravité sur des chemins de roulement depuis un côté réapprovisionnement de l'étagère vers un côté prélèvement de celle-ci, au moins un des chemins de roulement comportant un système de blocage permettant d'arrêter une unité de stockage dans une position d'attente située en amont de la position de prélèvement par rapport au sens de l'acheminement, le système de blocage comprenant un levier monté pivotant autour d'un axe dans des directions opposées et comportant deux branches formant entre elles un angle, l'une des deux branches (10, 11) comportant un manche (12) qui forme avec celle-ci un angle, le manche comportant une ouverture destinée à recevoir l'axe de pivotement, un poids (14) faisant office de moyen de redressement du levier étant prévu en aval de l'ouverture (13),
**caractérisée en ce**
**que** l'unité de stockage (60) est retenue dans la position d'attente par le siège formé par les deux branches (10, 11) de telle sorte que l'autre des deux branches (10, 11) coopère avec l'unité de stockage pour empêcher le levier de se redresser.

2. Etagère dynamique selon la revendication 1,
**caractérisée en ce**
**que** les deux branches (10, 11) forment entre elles un angle d'environ 90°.

3. Etagère dynamique selon la revendication 1,
**caractérisée en ce**
**que** le manche (12) s'étend dans sa largeur sur toute la largeur de la branche (11) recevant le manche.

4. Etagère dynamique selon la revendication 3,
**caractérisée en ce**
**que** les deux branches (10, 11) forment un siège qui est reçu par le manche (12) dans une position basculée.

5. Etagère dynamique selon la revendication 1,
**caractérisée en ce**
**que** le système de blocage comprend un cliquet de blocage (70).

6. Etagère dynamique selon la revendication 5,
**caractérisée en ce**
**que**, lorsque l'unité de stockage évolue en direction du côté réapprovisionnement, le cliquet de blocage (70) est en position de blocage.

7. Etagère dynamique selon la revendication 1 ou 5,
**caractérisée en ce**
**que** le levier (1) et/ou le cliquet de blocage (70) est conformé en forme de pièce en matière plastique.
